# EUROPÄISCHE PATENTSCHRIFT

(11) **EP 1 018 302 B1**
(45) Veröffentlichungstag und Bekanntmachung des Hinweises auf die Patenterteilung: **29.10.2003**
(21) Anmeldenummer: 98120672.5
(22) Anmeldetag: 05.11.1998
(51) Int. Cl.: A23G 1/00, A23G 3/00

(54) **Süsswarenhohlkörper**
Hollow confectionery objects
Objects creux de confiserie

(43) Veröffentlichungstag der Anmeldung: 12.07.2000
(73) Patentinhaber: Ferrero oHG mbH, 60599 Frankfurt (DE); Ferrero S.p.A., 12051 Alba (Cuneo) (IT); SOREMARTEC S.A., 6700 Arlon-Schoppach (BE)
(72) Erfinder: Pavese, Franco, 35260 Stadtallendorf (DE)
(74) Vertreter: HOFFMANN - EITLE

(56) Entgegenhaltungen:
- EP-A- 0 951 835
- WO-A-93/00267
- WO-A-96/31127
- DE-A- 4 141 727
- DE-A- 19 725 312
- DE-B- 1 297 454
- GB-A- 618 213
- GB-A- 1 421 516
- US-A- 5 792 496
- DATABASE WPI Section Ch, Week 9438 Derwent Publications Ltd., London, GB; Class D13, AN 94-303435 XP002094881 -& BR 9 301 046 A (SONNLEITHNER H) , 23. August 1994

## Beschreibung

Die vorliegenden Erfindung betrifft einen Süßwarenhohlkörper aus einer Süßwarenmasse, insbesondere einer Schokoladenart oder schokoladenartigen Masse.

Aus EP-A-0951835 (Stand der Technik gemäß Art. 54(3) EPÜ) ist ein Süßwarenhohlkörper bekannt, der aus einer nichtessbaren, zweiteiligen Stützschale besteht, die von einer Süßwarenschicht überzogen ist. Die Stützschalenteile sind entlang ihrer Querachse miteinander lösbar verbunden und teilen die Süßwarenschicht in zwei Segmente.

Der vorliegenden Erfindung liegt das technische Problem zu Grunde, einen neuartigen Süßwarenhohlkörper zu schaffen.

Dieses technische Problem wird gelöst durch einen Süßwarenhohlkörper mit den Merkmalen des Anspruchs 1.

Dieser Süßwarenhohlkörper aus einer Süßwarenmasse, insbesondere einer Schokoladenart oder schokoladenartigen Masse, umfasst eine im Inneren des Süßwarenhohlkörpers angeordnete, nicht essbare dünnwandige Stützschale mit mindestens zwei miteinander korrespondierenden Stützschalenteilen, die jeweils im Bereich ihres Stützschalenrands Anschlussmittel aufweisen, mit denen die Stützschalenteile lösbar miteinander verbunden sind. Ferner umfasst der Süßwarenhohlkörper mindestens zwei den Stützschalenteilen zugeordnete Süßwarenkörper-Schalen, die jeweils lösbar an der Außenseite ihres zugeordneten Stützschalenteils anliegen, sowie mindestens ein nicht essbares Trennelement, das die Süßwarenkörper-Schalen räumlich voneinander trennt.

Der Begriff Süßwarenhohlkörper umfaßt insbesondere Schokoladeneier und zwar auch solche mit innen liegendem Kleinspielzeug. Die Erfindung ist indes nicht ausschließlich auf diese letztgenannten Produkte und die damit verbundene Formgebung beschränkt. Grundsätzlich kann die Erfindung auch auf jeden anderen geeigneten Süßwarenhohlkörper angewendet werden. Die Stützschalenteile sind vorzugsweise als Stützschalenhälften ausgebildet. Ebenso sind die Süßwarenkörper-Schalen vorzugsweise als Süßwarenkörper-Halbschalen ausgestaltet. Diese Gestaltung ist für die Erfindung indes nicht zwingend. Miteinander korrespondierende Stützschalenteile können durchaus auch unterschiedlich geformt sein. Ein gleiches gilt für die Süßwarenkörper-Schalen. Die Stützschalenteile besitzen vorzugsweise eine geschlossene Oberfläche, sie können jedoch auch Öffnungen aufweisen.

Bei dem erfindungsgemäßen Süßwarenhohlkörper ist die Süßwarenmasse also an der Außenseite der dünnwandigen Stützschale bzw. der Stützschalenteile vorgesehen, die sich im Inneren des Süßwarenhohlkörpers befindet bzw. befinden. Die Innenkontur einer jeweiligen Süßwarenkörper-Schale liegt dabei an der Außenkontur des zugeordneten Stützschalenteils an und haftet ggf. leicht an diesem. Der Hafteffekt kann zum Beispiel durch die leichte Schrumpfung der Süßwarenmasse, die in der Regel in einem erwärmten Zustand verarbeitet wird, während des Herstellungsprozesses der Süßwarenkörper-Schalen erzielt werden. In ihrer einfachsten Ausgestaltungsform sind die Süßwarenkörper-Schalen einschichtig aufgebaut. Das Trennelement bewirkt, daß die Süßwarenkörper-Schalen (beziehungsweise zumindest zwei Süßwarenkörper-Schalen, falls mehr als zwei davon vorhanden sind) nicht direkt miteinander verbunden sind. Der durch die Süßwarenkörper-Schalen gebildete Süßwarenhohlkörper ist also, obwohl infolge der Anordnung der Süßwarenkörper-Schalen an ihren Stützschalenteilen durchaus ein gegenteiliger Eindruck entsteht, nicht geschlossen.

Weitere bevorzugte vorteilhafte Ausführungsmerkmale des erfindungsgemäßen Süßwarenhohlkörpers sind Gegenstand der Unteransprüche.

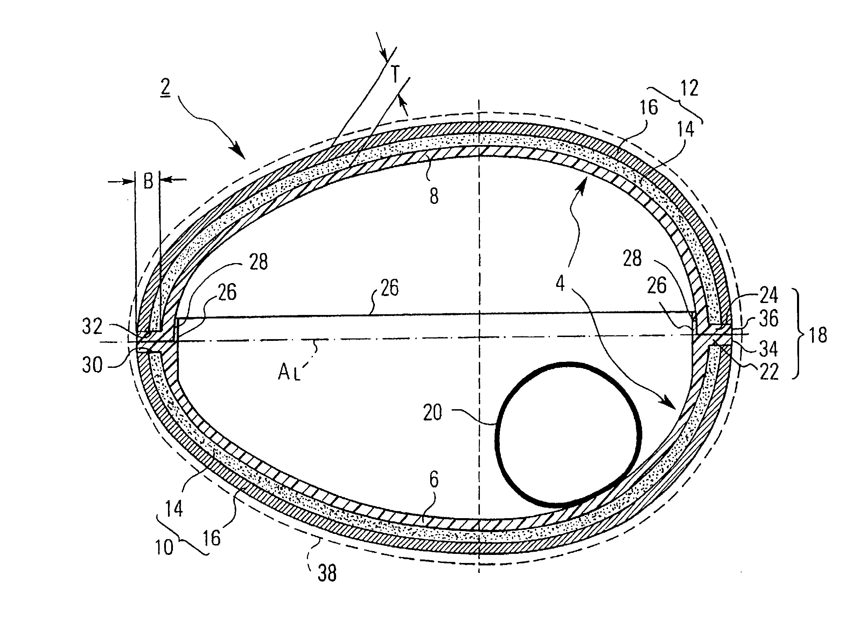

Eine bevorzugte Ausführungsform sowie weitere Einzelheiten und Vorteile des erfindungsgemäßen Süßwarenhohlkörpers sind nachfolgend unter Bezugnahme auf die beiliegende Zeichnung, die eine schematische Querschnittsansicht eines erfindungsgemäßen Süßwarenhohlkörpers darstellt, näher beschrieben und erläutert.

Wie aus der Figur ersichtlich, die eine schematische Querschnittsansicht eines erfindungsgemäßen Süßwarenhohlkörpers zeigt, besitzt der Süßwarenhohlkörper 2, der aus einer Süßwarenmasse, insbesondere einer Schokoladenart bzw. einer Schokoladenmasse oder einer schokoladenartigen Masse hergestellt ist, im vorliegenden Ausführungsbeispiel eine rotationssymmetrische Eiform. Im Inneren des Süßwarenhohlkörpers 2 ist eine nicht eßbare dünnwandige Stützschale 4 angeordnet, die aus zwei miteinander korrespondierenden Stützschalenteilen 6, 8 zusammengesetzt ist. Die Stützschalenteile 6, 8 sind im wesentlichen gleichförmig ausgebildet und besitzen die Gestalt einer Ei-Halbschale. Die Stützschalenteile 6, 8 sind aus einem lebensmittelechten Kunststoffmaterial, zum Beispiel Polypropylen (PP), hergestellt bzw. tiefgezogen. Die Wandstärke der Stützschalenteile 6, 8 beträgt jeweils im Mittel ca. 0,2 - 0,3 mm. Je nach Größe einer Stützschale 6, 8 kann die Wandstärke selbstverständlich von den genannten Werten abweichen.

Im Bereich ihres Stützschalenrands weisen die Stützschalenteile 6, 8 Anschlußmittel (nachfolgend noch genauer erläutert) auf, mit denen die Stützschalenteile 6, 8 lösbar miteinander verbunden sind. Die eßbaren Bestandteile des erfindungsgemäßen Süßwarenhohlkörpers 2 bilden zwei den Stützschalenteilen zugeordnete gleichförmige Süßwarenkörper-Schalen 10, 12 bzw. Süßwarenkörper-Schalenhälften 10, 12, die jeweils lösbar an der Außenseite ihres zugeordneten Stützschalenteils 6, 8 anliegen. Die Süßwarenkörper-Schalen 10, 12 bilden also gewissermaßen einen Überzug, der die Außenseite der Stützschalenteilen 6, 8 im wesentlichen vollflächig überdeckt, wobei die Innenkontur einer jeweiligen Süßwarenkörper-Schale 10, 12 an der Außenkontur des zugeordneten Stützschalenteils 6, 8 anliegt und ggf. leicht an diesem haftet. Folglich besitzen die Süßwarenkörper-Schalen 10, 12 eine mit der Gestalt der Stützschalenteile 6, 8 im wesentlichen übereinstimmende Schalenform. Die beiden Süßwarenkörper-Schalen 10, 12 des Süßwarenhohlkörpers 2 sind jeweils mehrschichtig, d.h. im vorliegenden Fall zweischichtig, aufgebaut, wobei die erste, innere Schicht 14 aus einer hellen Süßwarenmasse z.B. einer Milchcremeschicht und die zweite, äußere Schicht 16 aus einer Schokoladenmasse besteht. Die Wandstärke T der durch die beiden Schichten 14, 16 gebildeten Schalenwandung beträgt hier ca. 2,5 mm. Dieser Wert ist lediglich als Beispiel zu verstehen; die Erfindung ist selbstverständlich nicht auf diese Wandstärkenabmessung beschränkt.

Die Süßwarenkörper-Schalen 10, 12 sind durch ein nicht eßbares Trennelement 18 räumlich voneinander getrennt (dieses Trennelement 18 wird nachfolgend noch eingehender erläutert werden). Zwischen den beiden Süßwarenkörper-Schalen 10, 12 besteht demnach keine direkt Verbindung. Der aus den Süßwarenkörper-Schalen 10, 12 gebildete Süßwarenhohlkörper 2 als solcher ist also, obwohl bei flüchtiger Betrachtung durchaus ein gegenteiliger Eindruck entstehen mag, nicht geschlossen. Die innenliegenden Stützschalenteile 6, 8 hingegen sind über ihre Anschlußmittel zu der geschlossenen aber wieder zu öffnenden eiförmigen Stützschale 4 zusammengesetzt. Im Inneren dieser Stützschale 4 ist ein Kleinartikel 20, beispielsweise ein kleines Spielzeug, angeordnet.

Nachfolgend werden nun weitere Details der Stützschalenteile 6, 8 erläutert. Die Anschlußmittel eines jeweiligen Stützschalenteils 6, 8 sind im vorliegenden Ausführungsbeispiel in der Form eines integralen umlaufenden flanschartigen Stützschalenrandes 22, 24 ausgebildet, der sich radial nach außen erstreckt. Wie in der Zeichnung erkennbar, liegen die beiden Stützschalenteile 6, 8 an ihren Stützschalenrändern 22, 24 in passender Ausrichtung aneinander. Die Stützschalenteile 6, 8 umfassen als Bestandteil der Anschlußmittel des weiteren ein Zentriermittel 26, mit dem die miteinander korrespondierenden Stützschalenteile 6, 8 zentriert und in der passenden Ausrichtung zueinander gehalten sind. Bei diesem Zentriermittel 26 handelt es sich im vorliegenden Fall um einen an einem radial inneren Abschnitt des Stützschalenrands 22 der unteren Stützschale 6 verlaufenden Zentrierring 26. Dieser Zentrierring 26 greift in einen korrespondierenden radial inneren Einfügeabschnitt 28 des Stützschalenrands 24 des zweiten, oberen Stützschalenteils 8 ein. Der Außenumfang des Zentrierrings 26 und der Innenumfang des Einfügeabschnitts 28 bilden eine leichte Preßpassung zwischen den beiden Stützschalenteile 6, 8 aus, so daß die Stützschalenteile 6, 8 zum Verschließen mit leichtem Druck ineinandergefügt und zum Öffnen durch einen leichten Handgriff wieder voneinander gelöst werden können.

Das die Süßwarenkörper-Schalen 10, 12 räumlich voneinander trennende Trennelement 18 wird im vorliegenden Beispiel durch Stützschalenabschnitte der beiden Stützschalenteile 6, 8 selbst gebildet. Bei diesen Stützschalenabschnitten handelt es sich um die bereits zuvor erwähnten aufeinanderliegenden flanschartigen Stützschalenränder 22, 24, die, wie in der Zeichnung gut zu erkennen, entlang der Süßwarenkörper-Schalenränder 30, 32 als eine Einheit zwischen die Süßwarenkörper-Schalen 10, 12 ragen. Die durch ein derartiges Trennelement 18 gebildete Trennebene erstreckt sich hierbei (wenn man die Wandstärke der Stützschalenränder 22, 24 nicht berücksichtigt) durch die Längsachse A_{L} des eiförmigen Süßwarenhohlkörpers 2. Die Breite B der flanschartigen Stützschalenränder 22, 24 ist so gewählt, daß sie im wesentlichen der Wandstärke T der jeweiligen Süßwarenkörper-Schale 10, 12 entspricht, die an der Außenseite des zugehörigen Stützschalenteils 6, 8 anliegt bzw. dieses Stützschalenteil 6, 8 überzieht. Die Breite B beträgt hier also ca. 2,5 mm. Der äußere Randabschnitt 34, 36 der beiden flanschartigen Stützschalenränder 22, 24 ist somit jeweils im wesentlichen bündig mit der Außenkontur der Süßwarenkörper-Schalen 10, 12. Es ist im Sinne der Erfindung indes auch vorgesehen, die Breite B zumindest an Teilbereichen der Stützschalenränder 22, 24 größer als die Wandstärke T auszulegen, um beispielsweise eine Lasche zum leichteren Öffnen der Stützschalenteile 6, 8 und/oder zum Ablösen der Süßwarenkörper-Schalen 10, 12 zu formen und/oder um einen weiter über die Außenkontur der Süßwarenkörper-Schalen 10, 12 hinaus ragenden scheibenförmigen Rand auszubilden.

Wie in der Zeichnung durch eine gestrichelte Linie angedeutet, ist der erfindungsgemäße Süßwarenhohlkörper 2 an seiner Außenseite vollständig mit einer Außenverpackung 38 versehen, welche die Süßwarenkörper-Schalen 10, 12 umgibt. Diese Außenverpackung 38 ist bei dem vorliegenden Ausführungsbeispiel als Einschlagverpackung ausgelegt.

Die Erfindung ist nicht auf das obige Ausführungsbeispiel, das lediglich der allgemeinen Erläuterung des Grundgedankens der Erfindung dient, beschränkt. Im Rahmen des Schutzumfangs kann der erfindungsgemäße Süßwarenhohlkörper vielmehr auch andere als die oben beschriebenen Ausgestaltungsformen annehmen. Der Süßwarenhohlkörper kann hierbei insbesondere Merkmale aufweisen, die eine Kombination aus den Einzelmerkmalen der jeweiligen Ansprüche darstellen. Ferner kann der Süßwarenhohlkörper selbstverständlich auch eine andere als die oben beschriebene Eiform aufweisen, zum Beispiel eine Kugelform oder eine andere, durchaus komplexere Gestalt. Analog dazu kann auch die Formgebung der dünnwandigen Stützschalenteile abgeändert werden. Für einen Süßwarenhohlkörper können bei Bedarf auch mehr als zwei Stützschalenteile und/oder Süßwarenkörper-Schalen verwendet werden. Sofern Süßwarenkörper-Schalen mit einem mehrschichtigen Aufbau eingesetzt werden, so können die Süßwarenmassen, welche die Schichten bilden, generell sowohl gleich als auch unterschiedlich sein. Auch kann das Trennelement als ein von den Stützschalenteilen separates Bauteil ausgestaltet sein; zum Beispiel als ein ringartiges oder scheibenförmiges Element, das analog zu der Anordnung der oben beschriebenen flanschartigen Stützschalenränder entlang der Süßwarenkörper-Schalenränder zwischen die Süßwarenkörper-Schalen ragt und diese räumlich voneinander trennt. Das Trennelement kann selbstverständlich auch mehrteilig sein.

Bezugszeichen in den Ansprüchen, der Beschreibung, der Zusammenfassung und den Zeichnungen dienen lediglich dem besseren Verständnis der Erfindung und sollen den Schutzumfang nicht einschränken.

### Bezugszeichenliste

Es bezeichnen:
- 2: Süßwarenhohlkörper
- 4: Stützschale
- 6: Stützschalenteil
- 8: Stützschalenteil
- 10: Süßwarenkörper-Schale
- 12: Süßwarenkörper-Schale
- 14: Innere Schalenschicht von 10, 12
- 16: Äußere Schalenschicht von 10, 12
- 18: Trennelement
- 20: Überraschungsartikel
- 22: Flanschartiger Stützschalenrand von 4
- 24: Flanschartiger Stützschalenrand von 6
- 26: Zentrierring / Zentriermittel
- 28: Einfügeabschnitt
- 30: Süßwarenkörper-Schalenrand von 10
- 32: Süßwarenkörper-Schalenrand von 12
- 34: Äußerer Randabschnitt von 22
- 36: Äußerer Randabschnitt von 24
- 38: Außenverpackung / Einschlagverpackung

- A_{L}: Längsachse von 2
- B: Breite von 22, 24
- T: Wandstärke von 10, 12

## Patentansprüche (Patentansprüche für folgende(n) Vertragsstaat(en): DE, FR, GB, IT)

1. Süßwarenhohlkörper (2) aus einer Süßwarenmasse, insbesondere einer Schokoladenart oder schokoladenartigen Masse, umfassend:
eine im Inneren des Süßwarenhohlkörpers angeordnete nicht essbare dünnwandige Stützschale (4) die entlang einer Trennebene geteilt ist, die sich durch eine Längsachse A_{L} des Süßwarenhohlkörpers erstreckt, so dass die Stützschale (4) mindestens zwei miteinander korrespondierende Stützschalenteilen (6, 8) aufweist, die jeweils im Bereich ihres Stützschalenrands (22, 24) Anschlussmittel (22, 24, 26, 28) aufweisen, mit denen die Stützschalenteile (6, 8) lösbar miteinander verbunden sind,
mindestens zwei den Stützschalenteilen (6, 8) zugeordnete Süßwarenkörper-Schalen (10, 12), die jeweils lösbar an der Außenseite ihres zugeordneten Stützschalenteils (6, 8) anliegen, und
mindestens ein nicht essbares Trennelement (18; 22, 24), das die Süßwarenkörper-Schalen (10, 12) räumlich voneinander trennt.

2. Süßwarenhohlkörper nach Anspruch 1,
**dadurch gekennzeichnet, dass**
die Anschlussmittel (22, 24, 26, 28) eine Presspassung (26, 28) zwischen den Stützschalenteilen (6, 8) umfassen.

3. Süßwarenhohlkörper nach Anspruch 1 oder 2,
**dadurch gekennzeichnet, dass**
die Anschlussmittel (22, 24, 26, 28) mindestens einen an einem jeweiligen Stützschalenteil (6, 8) ausgebildeten umlaufenden flanschartigen Stützschalenrand (22, 24)
umfassen, an dem die Stützschalenteile (6, 8) in passender Ausrichtung aneinanderliegen.

4. Süßwarenhohlkörper nach einem oder mehreren der vorhergenannten Ansprüche, **dadurch gekennzeichnet, dass** mindestens eines der Stützschalenteile (6, 8) ein Zentriermittel (26) besitzt, mit dem die miteinander korrespondierenden Stützschalenteile (6, 8) zentriert und in passender Ausrichtung zueinander verbindbar sind.

5. Süßwarenhohlkörper nach Anspruch 4, **dadurch gekennzeichnet, dass** das Zentriermittel ein an einem inneren Abschnitt eines Stützschalenrands (22) einer Stützschale (6) verlaufender Zentrierring (26) ist, der in einen korrespondierenden inneren Einfügeabschnitt (28) einer zugeordneten Stützschale (8) eingreift.

6. Süßwarenhohlkörper nach einem oder mehreren der vorhergenannten Ansprüche, **dadurch gekennzeichnet, dass** das Trennelement (18) ein Stützschalenabschnitt (22, 24) von mindestens einem der Stützschalenteile (6, 8) ist.

7. Süßwarenhohlkörper nach Anspruch 6, **dadurch gekennzeichnet, dass** der die Süßwarenkörper-Schalen (6, 8) räumlich voneinander trennende Stützschalenabschnitt (22, 24) mindestens einer der flanschartigen Stützschalenränder (22, 24) ist, wobei dieser flanschartige Stützschalenrand (22, 24) entlang der Süßwarenkörper-Schalenränder (30, 32) zwischen die Süßwarenkörper-Schalen (10, 12) ragt.

8. Süßwarenhohlkörper nach Anspruch 7,
**dadurch gekennzeichnet, dass**
die Breite (B) des zwischen die Süßwarenkörper-Schalen (10, 12) ragenden mindestens einen flanschartigen Stützschalenrands (22, 24) einer Süßwarenkörper-Schale (10, 12) im wesentlichen der Wandstärke (T) der Süßwarenkörper-Schale (10, 12) entspricht, die an der Außenseite dieses Stützschalenteils (6, 8) anliegt.

9. Süßwarenhohlkörper nach einem oder mehreren der vorhergenannten Ansprüche, **dadurch gekennzeichnet, dass** die Stützschalenteile (6, 8) und/oder das Trennelement (18; 22, 24) aus einem lebensmittelechten Kunststoffmaterial hergestellt sind.

10. Süßwarenhohlkörper nach einem oder mehreren der vorhergenannten Ansprüche, **dadurch gekennzeichnet, dass** die Süßwarenkörper-Schalen (10, 12) mehrschichtig (14, 16) aufgebaut sind.

11. Süßwarenhohlkörper nach einem oder mehreren der vorhergenannten Ansprüche, **dadurch gekennzeichnet, dass** dieser eiförmig ist.

12. Süßwarenhohlkörper nach einem oder mehreren der vorhergenannten Ansprüche, **dadurch gekennzeichnet, dass** im Inneren der Stützschale (4; 6, 8) mindestens ein Kleinartikel (20) angeordnet ist.

13. Süßwarenhohlkörper nach einem oder mehreren der vorhergenannten Ansprüche, **dadurch gekennzeichnet, dass** dieser mit einer die Süßwarenkörper-Schalen (10, 12) umgebenden Außenverpackung (38) versehen ist.

## Patentansprüche (Patentansprüche für folgende(n) Vertragsstaat(en): AT, BE, CH, CY, DK, ES, FI, IE, LI, LU, MC, NL, PT, SE)

1. Süßwarenhohlkörper (2) aus einer Süßwarenmasse, insbesondere einer Schokoladenart oder schokoladenartigen Masse, umfassend:
- eine im Inneren des Süßwarenhohlkörpers angeordnete nicht eßbare dünnwandige Stützschale (4) mit mindestens zwei miteinander korrespondierenden Stützschalenteilen (6, 8), die jeweils im Bereich ihres Stützschalenrands (22, 24) Anschlußmittel (22, 24, 26, 28) aufweisen, mit denen die Stützschalenteile (6, 8) lösbar miteinander verbunden sind,
- mindestens zwei den Stützschalenteilen (6, 8) zugeordnete Süßwarenkörper-Schalen (10, 12), die jeweils lösbar an der Außenseite ihres zugeordneten Stützschalenteils (6, 8) anliegen, und
- mindestens ein nicht eßbares Trennelement (18; 22, 24), das die Süßwarenkörper-Schalen (10, 12) räumlich voneinander trennt.

2. Süßwarenhohlkörper nach Anspruch 1,
**dadurch gekennzeichnet, daß**
die Anschlußmittel (22, 24, 26, 28) eine Preßpassung (26, 28) zwischen den Stützschalenteilen (6, 8) umfassen.

3. Süßwarenhohlkörper nach Anspruch 1 oder 2,
**dadurch gekennzeichnet, daß**
die Anschlußmittel (22, 24, 26, 28) mindestens einen an einem jeweiligen Stützschalenteil (6, 8) ausgebildeten umlaufenden flanschartigen Stützschalenrand (22, 24) umfassen, an dem die Stützschalenteile (6, 8) in passender Ausrichtung aneinanderliegen.

4. Süßwarenhohlkörper nach einem oder mehreren der vorhergenannten Ansprüche,
**dadurch gekennzeichnet, daß**
mindestens eines der Stützschalenteile (6, 8) ein Zentriermittel (26) besitzt, mit dem die miteinander korrespondierenden Stützschalenteile (6, 8) zentriert und in passender Ausrichtung zueinander verbindbar sind.

5. Süßwarenhohlkörper nach Anspruch 4,
**dadurch gekennzeichnet, daß**
das Zentriermittel ein an einem inneren Abschnitt eines Stützschalenrands (22) einer Stützschale (6) verlaufender Zentrierring (26) ist, der in einen korrespondierenden inneren Einfügeabschnitt (28) einer zugeordneten Stützschale (8) eingreift.

6. Süßwarenhohlkörper nach einem oder mehreren der vorhergenannten Ansprüche,
**dadurch gekennzeichnet, daß**
das Trennelement (18) ein Stützschalenabschnitt (22, 24) von mindestens einem der Stützschalenteile (6, 8) ist.

7. Süßwarenhohlkörper nach Anspruch 6,
**dadurch gekennzeichnet, daß**
der die Süßwarenkörper-Schalen (6, 8) räumlich voneinander trennende Stützschalenabschnitt (22, 24) mindestens einer der flanschartigen Stützschalenränder (22, 24) ist, wobei dieser flanschartige Stützschalenrand (22, 24) entlang der Süßwarenkörper-Schalenränder (30, 32) zwischen die Süßwarenkörper-Schalen (10, 12) ragt.

8. Süßwarenhohlkörper nach Anspruch 7,
**dadurch gekennzeichnet, daß**
die Breite (B) des zwischen die Süßwarenkörper-Schalen (10, 12) ragenden mindestens einen flanschartigen Stützschalenrands (22, 24) einer Süßwarenkörper-Schale (10, 12) im wesentlichen der Wandstärke (T) der Süßwarenkörper-Schale (10, 12) entspricht, die an der Außenseite dieses Stützschalenteils (6, 8) anliegt.

9. Süßwarenhohlkörper nach einem oder mehreren der vorhergenannten Ansprüche,
**dadurch gekennzeichnet, daß**
die Stützschalenteile (6, 8) und/oder das Trennelement (18; 22, 24) aus einem lebensmittelechten Kunststoffmaterial hergestellt sind.

10. Süßwarenhohlkörper nach einem oder mehreren der vorhergenannten Ansprüche,
**dadurch gekennzeichnet, daß**
die Süßwarenkörper-Schalen (10, 12) mehrschichtig (14, 16) aufgebaut sind.

11. Süßwarenhohlkörper nach einem oder mehreren der vorhergenannten Ansprüche,
**dadurch gekennzeichnet, daß**
dieser eiförmig ist.

12. Süßwarenhohlkörper nach einem oder mehreren der vorhergenannten Ansprüche,
**dadurch gekennzeichnet, daß**
dieser kugelförmig ist.

13. Süßwarenhohlkörper nach einem oder mehreren der vorhergenannten Ansprüche,
**dadurch gekennzeichnet, daß**
im Inneren der Stützschale (4; 6, 8) mindestens ein Kleinartikel (20) angeordnet ist.

14. Süßwarenhohlkörper nach einem oder mehreren der vorhergenannten Ansprüche,
**dadurch gekennzeichnet, daß**
dieser mit einer die Süßwarenkörper-Schalen (10, 12) umgebenden Außenverpackung (38) versehen ist.

## Claims (Claims for the following Contracting State(s): DE, FR, GB, IT)

1. Hollow confectionery body (2) consisting of a confectionery composition, in particular a type of chocolate or chocolate-like composition, including:
a non-edible thin-walled support shell (4) which is arranged inside the hollow confectionery body and which is divided along a dividing plane extending through a longitudinal axis A_{L} of the hollow confectionery body, so that the support shell (4) comprises at least two support shell portions (6, 8) corresponding to each other, which in each case in the region of their support shell edge (22, 24) comprise connecting means (22, 24, 26, 28) with which the support shell portions (6, 8) are releasably connected to each other,
at least two confectionery body shells (10, 12) which are associated with the support shell portions (6, 8) and which in each case abut releasably against the outside of their associated support shell portion (6, 8), and
at least one non-edible dividing element (18; 22, 24) which spatially separates the confectionery body shells (10, 12) from each other.

2. Hollow confectionery body according to claim 1, **characterised in that** the connecting means (22, 24, 26, 28) include a force fit (26, 28) between the support shell portions (6, 8).

3. Hollow confectionery body according to claim 1 or 2, **characterised in that** the connecting means (22, 24, 26, 28) include at least one peripheral flange-like support shell edge (22, 24) which is formed on a respective support shell portion (6, 8) and at which the support shell portions (6, 8) abut against each other in mating alignment.

4. Hollow confectionery body according to one or more of the preceding claims, **characterised in that** at least one of the support shell portions (6, 8) has a centring means (26) with which the support shell portions (6, 8) corresponding to each other are centred and can be connected in mating alignment with each other.

5. Hollow confectionery body according to claim 4, **characterised in that** the centring means is a centring ring (26) which runs on an inner section of a support shell edge (22) of a support shell (6) and which engages in a corresponding inner insert section (28) of an associated support shell (8).

6. Hollow confectionery body according to one or more of the preceding claims, **characterised in that** the dividing element (18) is a support shell section (22, 24) of at least one of the support shell portions (6, 8).

7. Hollow confectionery body according to claim 6, **characterised in that** the support shell section (22, 24) which spatially separates the confectionery body shells (6, 8) from each other is at least one of the flange-like support shell edges (22, 24), wherein this flange-like support shell edge (22, 24) extends along the confectionery body shell edges (30, 32) between the confectionery body shells (10, 12).

8. Hollow confectionery body according to claim 7, **characterised in that** the width (B) of the at least one flange-like support shell edge (22, 24) of a confectionery body shell (10, 12) extending between the confectionery body shells (10, 12) essentially corresponds to the wall thickness (T) of the confectionery body shell (10, 12) which abuts against the outside of this support shell portion (6, 8).

9. Hollow confectionery body according to one or more of the preceding claims, **characterised in that** the support shell portions (6, 8) and/or the dividing element (18; 22, 24) are made from a food-resistant plastic material.

10. Hollow confectionery body according to one or more of the preceding claims, **characterised in that** the confectionery body shells (10, 12) are constructed in several layers (14, 16).

11. Hollow confectionery body according to one or more of the preceding claims, **characterised in that** it is egg-shaped.

12. Hollow confectionery body according to one or more of the preceding claims, **characterised in that** inside the support shell (4; 6, 8) is arranged at least one small article (20).

13. Hollow confectionery body according to one or more of the preceding claims, **characterised in that** it is provided with an outer package (38) surrounding the confectionery body shells (10, 12).

## Claims (Claims for the following Contracting State(s): AT, BE, CH, CY, DK, ES, FI, IE, LI, LU, MC, NL, PT, SE)

1. Hollow confectionery body (2) consisting of a confectionery composition, in particular a type of chocolate or chocolate-like composition, including:
- a non-edible thin-walled support shell (4), with at least two support shell portions (6, 8) corresponding to each other, which in each case in the region of their support shell edge (22, 24) comprise connecting means (22, 24, 26, 28) with which the support shell portions (6, 8) are releasably connected to each other,
- at least two confectionery body shells (10, 12) which are associated with the support shell portions (6, 8) and which in each case abut releasably against the outside of their associated support shell portion (6, 8), and
- at least one non-edible dividing element (18; 22, 24) which spatially separates the confectionery body shells (10, 12) from each other.

2. Hollow confectionery body according to claim 1, **characterised in that** the connecting means (22, 24, 26, 28) include a force fit (26, 28) between the support shell portions (6, 8).

3. Hollow confectionery body according to claim 1 or 2, **characterised in that** the connecting means (22, 24, 26, 28) include at least one peripheral flange-like support shell edge (22, 24) which is formed on a respective support shell portion (6, 8) and at which the support shell portions (6, 8) abut against each other in mating alignment.

4. Hollow confectionery body according to one or more of the preceding claims, **characterised in that** at least one of the support shell portions (6, 8) has a centring means (26) with which the support shell portions (6, 8) corresponding to each other are centred and can be connected in mating alignment with each other.

5. Hollow confectionery body according to claim 4, **characterised in that** the centring means is a centring ring (26) which runs on an inner section of a support shell edge (22) of a support shell (6) and which engages in a corresponding inner insert section (28) of an associated support shell (8).

6. Hollow confectionery body according to one or more of the preceding claims, **characterised in that** the dividing element (18) is a support shell section (22, 24) of at least one of the support shell portions (6, 8).

7. Hollow confectionery body according to claim 6, **characterised in that** the support shell section (22, 24) which spatially separates the confectionery body shells (6, 8) from each other is at least one of the flange-like support shell edges (22, 24), wherein this flange-like support shell edge (22, 24) extends along the confectionery body shell edges (30, 32) between the confectionery body shells (10, 12).

8. Hollow confectionery body according to claim 7, **characterised in that** the width (B) of the at least one flange-like support shell edge (22, 24) of a confectionery body shell (10, 12) extending between the confectionery body shells (10, 12) essentially corresponds to the wall thickness (T) of the confectionery body shell (10, 12) which abuts against the outside of this support shell portion (6, 8).

9. Hollow confectionery body according to one or more of the preceding claims, **characterised in that** the support shell portions (6, 8) and/or the dividing element (18; 22, 24) are made from a food-resistant plastic material.

10. Hollow confectionery body according to one or more of the preceding claims, **characterised in that** the confectionery body shells (10, 12) are constructed in several layers (14, 16).

11. Hollow confectionery body according to one or more of the preceding claims, **characterised in that** it is egg-shaped.

12. Hollow confectionery body according to one or more of the preceding claims, **characterised in that** it is ball-shaped.

13. Hollow confectionery body according to one or more of the preceding claims, **characterised in that** inside the support shell (4; 6, 8) is arranged at least one small article (20).

14. Hollow confectionery body according to one or more of the preceding claims, **characterised in that** it is provided with an outer package (38) surrounding the confectionery body shells (10, 12).

## Revendications (Revendications pour l'(les) Etat(s) contractant(s) suivant(s): AT, BE, CH, CY, DK, ES, FI, IE, LI, LU, MC, NL, PT, SE)

1. Article creux de confiserie (2) formé d'une masse de confiserie, notamment d'un type de chocolat ou d'une masse de type chocolaté, comprenant:
- une première coque d'appui (4) à paroi mince non comestible disposée à l'intérieur de l'article creux de confiserie, comportant au moins deux parties (6, 8) de coque d'appui qui se correspondent et qui possèdent, respectivement dans la zone de leur bord (22, 24) de coque d'appui, des moyens de raccordement (22, 24, 26, 28), avec lesquels les parties (6, 8) de coque d'appui sont reliées entre elles de façon amovible,
- au moins deux coques (10, 12) d'article de confiserie, associées aux parties (6, 8) de coque d'appui, qui s'appliquent respectivement de façon amovible contre la face extérieure de leur partie (6, 8) de coque d'appui associée, et
- au moins un élément de séparation (18; 22, 24) non comestible qui sépare spatialement l'une de l'autre les coques (10, 12) d'article de confiserie.

2. Article creux de confiserie selon la revendication 1, **caractérisé en ce que** les moyens de raccordement (22, 24, 26, 28) comprennent un système d'ajustement serré (26, 28) entre les parties (6, 8) de coque d'appui.

3. Article creux de confiserie selon la revendication 1 ou 2, **caractérisé en ce que** les moyens de raccordement (22, 24, 26, 28) comprennent au moins un bord (22, 24) de coque d'appui en forme de bride périphérique, qui est formé sur une partie (6, 8) de coque d'appui respective et contre lequel les parties (6, 8) de coque d'appui s'appliquent l'une contre l'autre avec un alignement adapté.

4. Article creux de confiserie selon une ou plusieurs des revendications précédentes, **caractérisé en ce qu'**au moins l'une des parties, (6, 8) de coque d'appui possède un moyen de centrage (26), avec lequel les parties (6, 8) de coque d'appui, qui se correspondent, sont centrées et peuvent être reliées entre elles avec un alignement adapté.

5. Article creux de confiserie selon la revendication 4, **caractérisé en ce que** le moyen de centrage est une bague de centrage (26), qui s'étend sur une portion intérieure d'un bord (22) de coque d'appui d'une coque d'appui (6) et qui s'engage dans une portion d'insertion (28) intérieure correspondante d'une coque d'appui (8) associée.

6. Article creux de confiserie selon une ou plusieurs des revendications précédentes, **caractérisé en ce que** l'élément de séparation (18) est une portion (22, 24) de coque d'appui d'au moins l'une des parties (6, 8) de coque d'appui.

7. Article creux de confiserie selon la revendication 6, **caractérisé en ce que** la portion (22, 24) de coque d'appui, qui sépare spatialement l'une de l'autre les coques (6, 8) de l'article de confiserie, est au moins l'un des bords (22, 24) de coque d'appui en forme de bride, ce bord (22, 24) de coque d'appui en forme de bride faisant saillie, le long des bords (30, 32) de coques de l'article creux de confiserie, entre les coques (10, 12) d'article creux de confiserie.

8. Article creux de confiserie selon la revendication 7, **caractérisé en ce que** la largeur (B) d'au moins un bord (22, 24) de coque d'appui en forme de bride, qui fait saillie entre les coques (10, 12) d'article de confiserie, correspond essentiellement à l'épaisseur de paroi (T) de la coque (10, 12) d'article de confiserie, qui s'applique contre la face extérieure de cette partie (6, 8) de coque d'appui.

9. Article creux de confiserie selon une ou plusieurs des revendications précédentes, **caractérisé en ce que** les parties (6, 8) de coque d'appui et/ou l'élément de séparation (18; 22, 24) sont réalisés en une matière plastique adaptée pour denrées alimentaires.

10. Article creux de confiserie selon une ou plusieurs des revendications précédentes, **caractérisé en ce que** les coques (10, 12) d'article de confiserie sont constituées de plusieurs couches (14, 16).

11. Article creux de confiserie selon une ou plusieurs des revendications précédentes, **caractérisé en ce que** cet article est en forme d'oeuf.

12. Article creux de confiserie selon une ou plusieurs des revendications précédentes, **caractérisé en ce que** ce corps possède une forme sphérique.

13. Article creux de confiserie selon une ou plusieurs des revendications précédentes, **caractérisé en ce qu'**au moins un petit article (20) est disposé à l'intérieur de la coque d'appui (4; 6, 8).

14. Article creux de confiserie selon une ou plusieurs des revendications précédentes, **caractérisé en ce que** cet article est pourvu d'un emballage extérieur (38) qui entoure les coques (10, 12) d'article de confiserie.

## Revendications (Revendications pour l'(les) Etat(s) contractant(s) suivant(s): DE, FR, GB, IT)

1. Article creux de confiserie (2) formé d'une masse de confiserie, notamment d'un type de chocolat ou d'une masse de type chocolaté, comprenant:
une première coque d'appui (4) à paroi mince non comestible disposée à l'intérieur de l'article creux de confiserie, qui est divisée dans un plan de séparation qui passe par un axe longitudinal A_{L} de l'article creux de confiserie de sorte que la coque d'appui (4) comporte au moins deux parties (6, 8) de coque d'appui qui se correspondent et qui possèdent, respectivement dans la zone de leur bord (22, 24) de coque d'appui, des moyens de raccordement (22, 24, 26, 28) avec lesquels les parties (6, 8) de coque d'appui sont reliées entre elles de façon amovible,
au moins deux coques (10, 12) d'article de confiserie, associées aux parties (6, 8) de coque d'appui, qui s'appliquent respectivement de façon amovible contre la face extérieure de la partie (6, 8) de coque d'appui associée, et
au moins un élément de séparation (18; 22, 24), non comestible qui sépare spatialement l'une de l'autre les coques (10, 12) d'article de confiserie.

2. Article creux de confiserie selon la revendication 1, **caractérisé en ce que** les moyens de raccordement (22, 24, 26, 28) comprennent un système d'ajustement serré (26, 28) entre les parties (6, 8) de coque d'appui.

3. Article creux de confiserie selon la revendication 1 ou 2, **caractérisé en ce que** les moyens de raccordement (22, 24, 26, 28) comprennent au moins un bord (22, 24) de coque d'appui en forme de bride périphérique, qui est formé sur une partie (6, 8) de coque d'appui respective et contre lequel les parties (6, 8) de coque d'appui s'appliquent l'une contre l'autre avec un alignement adapté.

4. Article creux de confiserie selon une ou plusieurs des revendications précédentes, **caractérisé en ce qu'**au moins l'une des parties (6, 8) de coque d'appui possède un moyen de centrage (26), avec lequel les parties (6, 8) de coque d'appui, qui se correspondent, sont centrées et peuvent être reliées entre elles avec un alignement adapté.

5. Article creux de confiserie selon la revendication 4, **caractérisé en ce que** le moyen de centrage est une bague de centrage (26), qui s'étend sur une portion intérieure d'un bord (22) de coque d'appui d'une coque d'appui (6) et qui s'engage dans une portion d'insertion (28) intérieure correspondante d'une coque d'appui (8) associée.

6. Article creux de confiserie selon une ou plusieurs des revendications précédentes, **caractérisé en ce que** l'élément de séparation (18) est une portion (22, 24) de coque d'appui d'au moins l'une des parties (6, 8) de coque d'appui.

7. Article creux de confiserie selon la revendication 6, **caractérisé en ce que** la portion (22, 24) de la coque d'appui, qui sépare spatialement l'une de l'autre les coques (6, 8) de l'article de confiserie, est au moins l'un des bords (22, 24) de coque d'appui en forme de bride, ce bord (22, 24) de coque d'appui en forme de bride faisant saillie, le long des bords (30, 32) de coques de l'article creux de confiserie, entre les coques (10, 12) d'article creux de confiserie.

8. Article creux de confiserie selon la revendication 7, **caractérisé en ce que** la largeur (B) d'au moins un bord (22, 24) de coque d'appui en forme de bride d'une coque (10, 12) d'article de confiserie, qui fait saillie entre les coques (10, 12) de l'article de confiserie, correspond essentiellement à l'épaisseur de paroi (T) de la coque (10, 12) d'article de confiserie, qui s'applique contre la face extérieure de cette partie (6, 8) de coque d'appui.

9. Article creux de confiserie selon une ou plusieurs des revendications précédentes, **caractérisé en ce que** les parties (6, 8) de coque d'appui et/ou l'élément de séparation (18; 22, 24) sont réalisés en une matière plastique adaptée pour denrées alimentaires.

10. Article creux de confiserie selon une ou plusieurs des revendications précédentes, **caractérisé en ce que** les coques (10, 12) de l'article de confiserie sont constituées de plusieurs couches (14, 16).

11. Article creux de confiserie selon une ou plusieurs des revendications précédentes, **caractérisé en ce que** cet article est en forme d'oeuf.

12. Article creux de confiserie selon une ou plusieurs des revendications précédentes, **caractérisé en ce qu'**au moins un petit article (20) est disposé à l'intérieur de la coque d'appui (4; 6, 8).

13. Article creux de confiserie selon une ou plusieurs des revendications précédentes, **caractérisé en ce que** cet article est pourvu d'un emballage extérieur (38) qui entoure les coques (10, 12) d'article de confiserie.
